# EUROPEAN PATENT APPLICATION

(11) **EP 3 273 525 A1**
(43) Date of publication of application: **24.01.2018**
(21) Application number: 16764730.4
(22) Date of filing: 04.03.2016
(51) Int. Cl.: H01M 10/613, H01M 10/625, H01M 10/6551, H01M 10/6555, H01M 10/656, H01M 2/10, H01M 10/647, H01M 10/6567

(54) **ELECTRICAL STORAGE PACK**

(30) Priority: 19.03.2015 JP 2015055922
(71) Applicant: AutoNetworks Technologies, Ltd., Yokkaichi-shi, Mie 510-8503 (JP); Sumitomo Wiring Systems, Ltd., Yokkaichi-shi, Mie 510-8503 (JP); Sumitomo Electric Industries, Ltd., Osaka-shi, Osaka 541-0041 (JP)
(72) Inventor: KUBOKI Hideyuki, Yokkaichi-shi Mie 510-8503 (JP); HIRAI Hiroki, Yokkaichi-shi Mie 510-8503 (JP); HIGASHIKOZONO Makoto, Yokkaichi-shi Mie 510-8503 (JP)
(74) Representative: Takeuchi, Maya
(86) International application number: PCT/JP2016/056716
(87) International publication number: WO 2016/147900

(57) **Abstract**

An electricity storage pack (10) includes an electricity storage element (31) in which positive and negative electrode terminals (33A and 33B) are provided on one side, a case (11) that accommodates the electricity storage element (31), a holding member (60) that holds the electricity storage element (31) in an orientation in which the terminals (33A and 33B) are located on a lower side in the case 11, and a coolant 55 in liquid form that is accommodated in the case (11) so as to be in contact with the terminals (33A and 33B).

## Description

### Technical Field

A technique for dissipating heat of an electricity storage element is disclosed.

### Background Art

Conventional techniques for dissipating heat of an electricity storage element by bringing a coolant into contact with the electricity storage element are known.

Patent Document 1 discloses a battery module in which positive electrode terminals and negative electrode terminals of a plurality of single cells are electrically connected via busbars and that is accommodated in a packing case. A liquid coolant is placed in the lower portion of the packing case, and the liquid coolant absorbed by an absorption sheet is evaporated, so that heat of the battery is dissipated.

### Citation List

### Patent Documents

Patent Document 1: JP 2010-211963A

### Summary of Invention

### Technical Problem

The temperature rises at the positive electrode terminal and the negative electrode terminal of a single cell. However, in Patent Document 1, the upper portion of the battery module in which the positive electrode terminals and the negative electrode terminals are arranged is not in contact with a liquid coolant, and therefore, a problem arises in that the coolant cannot be used to dissipate heat of the positive electrode terminals and negative electrode terminals at which the temperature rises.

The present invention was accomplished based on the above-mentioned circumstances, and it is an object thereof to dissipate heat of a terminal of an electricity storage element via a coolant.

### Solution to Problem

An electricity storage pack of the present invention includes an electricity storage element in which a positive electrode terminal and a negative electrode terminal are provided on one side, a case that accommodates the electricity storage element, a holding member that holds the electricity storage element in an orientation in which the terminals are located on a lower side in the case, and a coolant in liquid form that is accommodated in the case so as to be in contact with the terminals.

With this configuration, the electricity storage element is accommodated in the case in an orientation in which the terminals are located on a lower side, and therefore, heat of the terminals of the electricity storage element can be dissipated via the coolant that are in contact with the terminals. Even when the electricity storage element is arranged in an orientation in which the terminals are located on a lower side in this manner, the electricity storage element is held by the holding member, thus making it possible to suppress the contact between the terminals and the bottom surface of the case or the like and protect the terminal.

The following embodiments are preferred as embodiments of the present invention.
- The electricity storage pack includes sandwiching members between which the electricity storage element is sandwiched and held, and the holding member includes a mount portion on which the sandwiching members are mounted.
   With this configuration, the electricity storage element can be held via the sandwiching members in the case by using a simple configuration in which the sandwiching members are mounted on the mount portion.
- The holding member includes a locking portion that is to be locked to the sandwiching members to hold the sandwiching members in a state in which the sandwiching members are mounted on the mount portion.
   With this configuration, the locking portion can hold the sandwiching members in the state in which the sandwiching members are mounted on the mount portion.
- The electricity storage pack includes an absorption sheet that absorbs the coolant in liquid form, and the absorption sheet is arranged between the electricity storage element and the sandwiching member.

With this configuration, the coolant absorbed by the absorption sheet receives heat, so that heat of the electricity storage element can be efficiently transferred to the coolant, while the sandwiching member can be used to guide the coolant evaporated from the absorption sheet to the upper side.

### Advantageous Effects of Invention

With the present invention, heat of a terminal of an electricity storage element can be dissipated via a coolant.

### Brief Description of Drawings

FIG. 1 is a perspective view of an electricity storage pack of an embodiment.
FIG. 2 is a plan view of the electricity storage pack.
FIG. 3 is a right side view of the electricity storage pack.
FIG. 4 is a cross-sectional view taken along line A-A in FIG. 3.
FIG. 5 is a cross-sectional view taken along line B-B in FIG. 3.
FIG. 6 is an exploded perspective view of the electricity storage pack.
FIG. 7 is a bottom view of a heat dissipation member.
FIG. 8 is a perspective view showing a state in which a heat transfer member is being fitted into a frame-shaped member.
FIG. 9 is a diagram showing a state in which an electricity storage element and an absorption sheet are being sandwiched between a plurality of sandwiching members.
FIG. 10 is a perspective view showing an assembly of an electricity storage module.
FIG. 11 is a perspective view showing a state in which a holding member is being attached to the electricity storage module.
FIG. 12 is a perspective view showing a state in which the holding member is attached to the electricity storage module.
FIG. 13 is a perspective view of a state shown in FIG. 12 as viewed from above.

### Description of Embodiments

### Embodiment 1

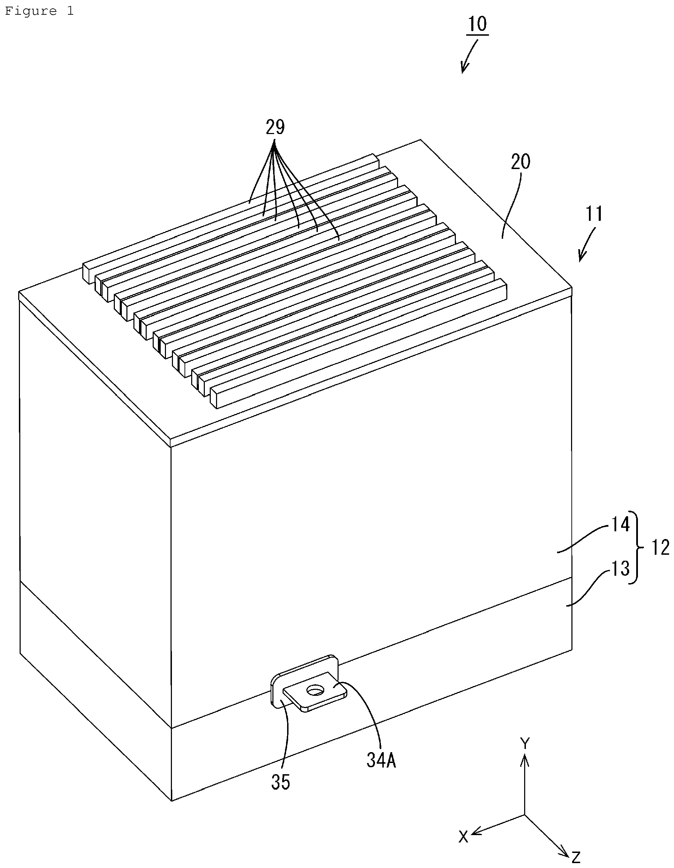

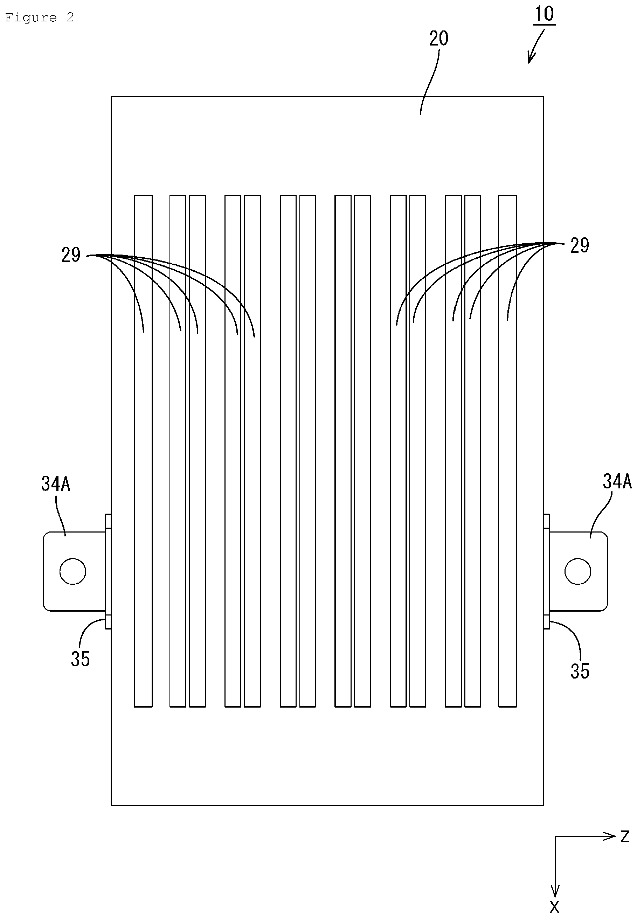

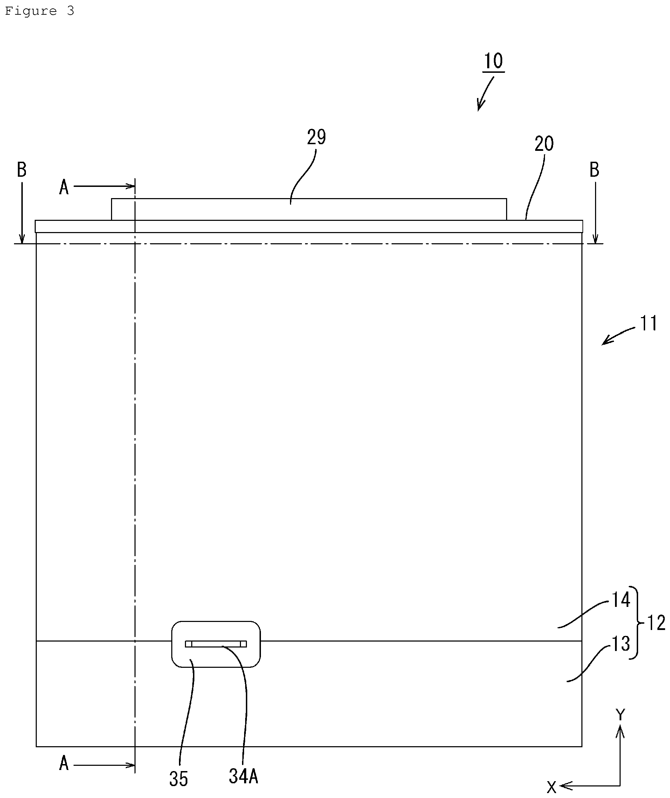

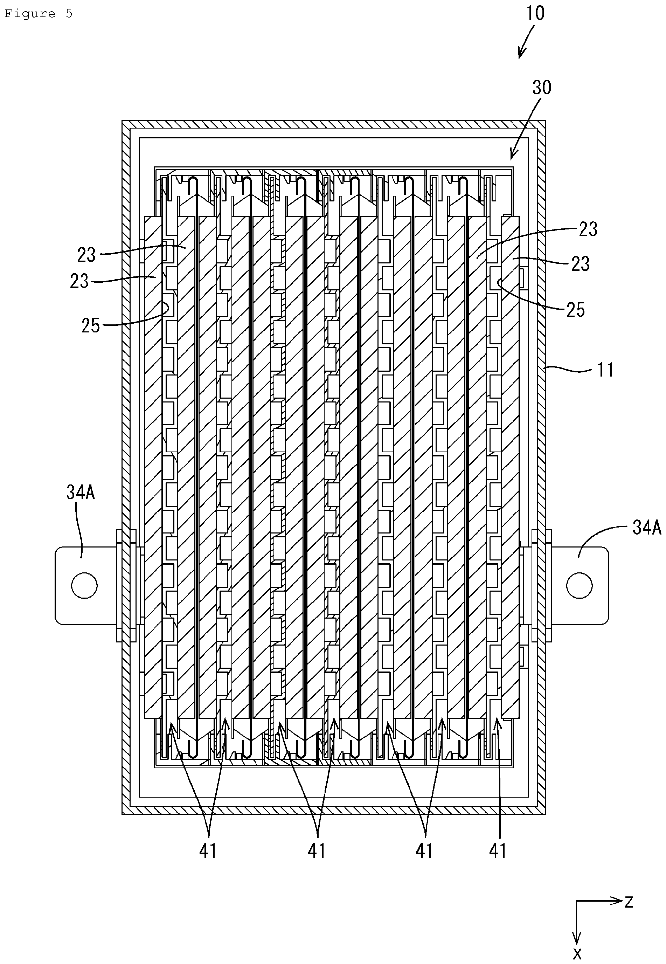

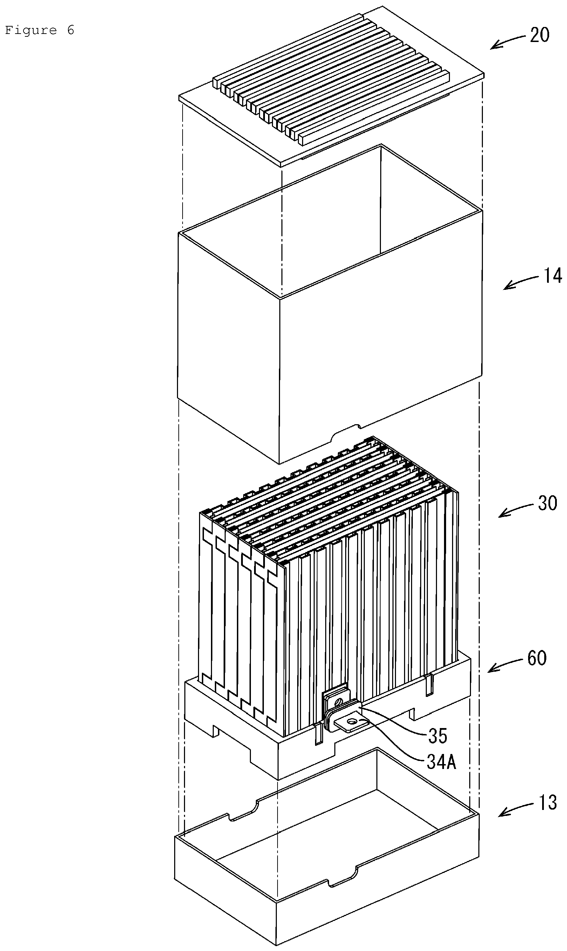

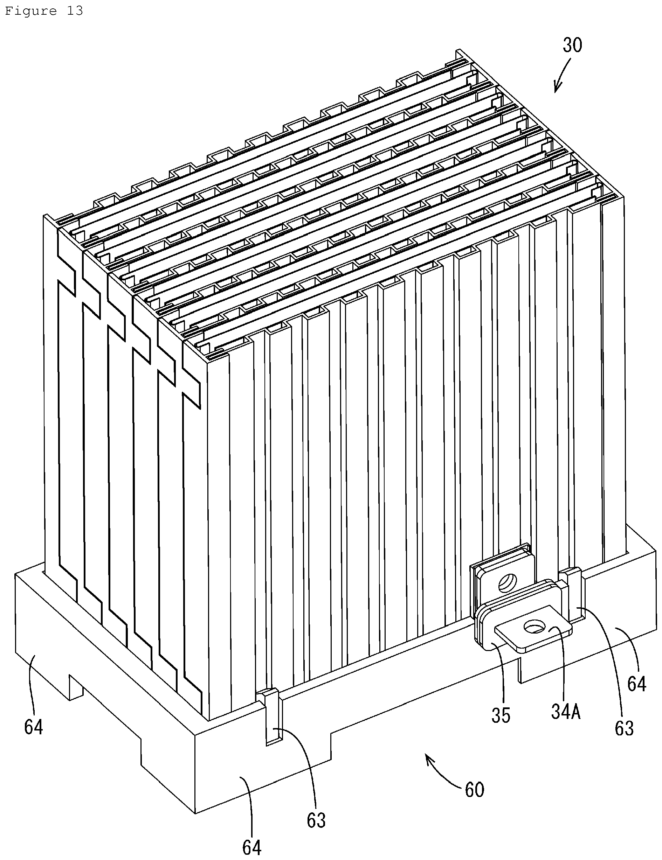

Embodiment 1 will be described with reference to FIGS. 1 to 13.

An electricity storage pack 10 (FIG. 1) is to be mounted in a vehicle such as an electric car or a hybrid car, for example. In the following description, the X direction indicates a "front side", the Y direction indicates an "upper side", and the Z direction indicates a "right side". The electricity storage pack 10 is mounted in a vehicle in an orientation in which the Y direction indicates the upper side.

### Electricity storage pack 10

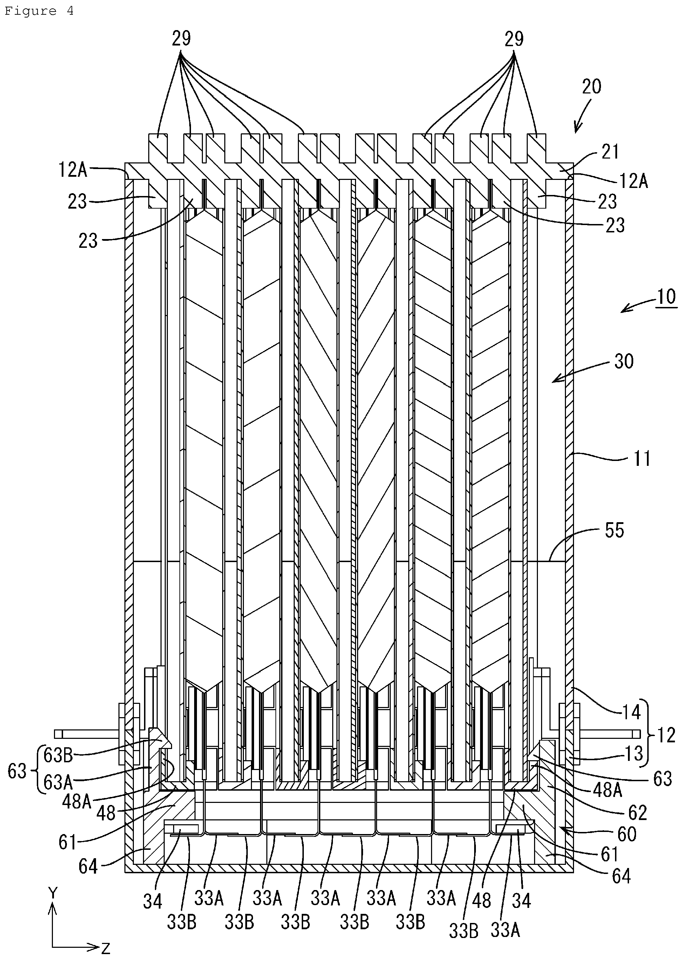

As shown in FIG. 4, the electricity storage pack 10 includes a case 11, an electricity storage module 30 accommodated in the case 11, a holding member 60 that holds the electricity storage module 30, and a coolant 55 accommodated in the case 11.

### Case 11

The case 11 is sealed, and includes a case main body 12 that is open at its upper end, and a heat dissipation member 20 that covers an opening 12A of the case main body 12. The case main body is made of metal, for example, and has a polygonal tube shape whose lower end is closed. The case main body 12 includes a receiving portion 13 that is arranged at the lower end and in which the holding member 60 is to be accommodated, and a polygonal tube portion 14 that is arranged above and continuous with the receiving portion 13. In the receiving portion 13, an erect wall having a polygonal tube shape rises from the peripheral edge of a rectangular base plate. The connection portion where the receiving portion 13 and the polygonal tube portion 14 are connected, and the connection portion where the polygonal tube portion 14 and the heat dissipation member 20 are connected are sealed through welding, for example. It should be noted that the material of the case main body 12 is not limited to metal, and the case main body 12 may also be made of a synthetic resin (plastic). In this case, the connection portion where the receiving portion 13 and the polygonal tube portion 14 are connected, and the connection portion where the polygonal tube portion 14 and the heat dissipation member 20 are connected can be sealed using a sealing structure such as an O-ring, for example.

### Heat dissipation member 20

The heat dissipation member 20 includes a plate-shaped portion 21 that has a flat plate shape and that is made of a metal material such as an aluminum alloy or a copper alloy having a high thermal conductivity, for example, a plurality of projections 23 that project downward from the lower surface of the plate-shaped portion21, and heat dissipation fins 29 that project upward from the top surface of the plate-shaped portion 21. The plate-shaped portion 21 has a rectangular shape, and closes the opening 12A of the case main body 12 without gaps.

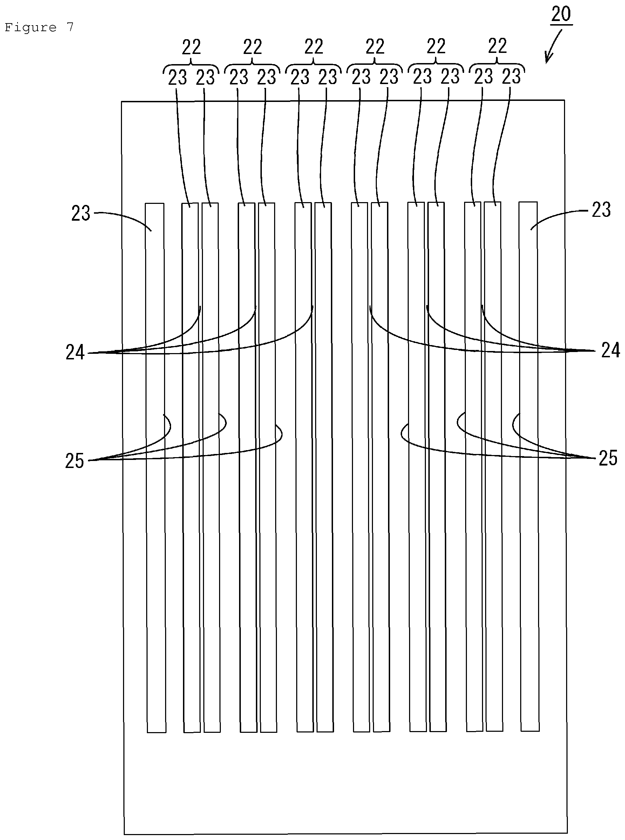

As shown in FIG. 7, the plurality of projections 23 are a plurality of projecting strips that are provided in a region located above the electricity storage module 30 and that extend in the front-rear direction, and are lined up with certain intervals therebetween in the left-right direction (the direction in which electricity storage elements 31 are lined up). Out of the plurality of projections 23, the projections 23 other than those at both ends in the left-right direction form projection pairs 22 that each include two of the projections 23 lined up. In each of the projection pairs 22, the adjacent projections 23 are lined up with a clearance groove 24 being located therebetween. Each of the clearance grooves 24 is formed to have a predetermined depth so as to be capable of accommodating an end 32A formed by fastening stacked laminate films in the electricity storage element 31.

Grooves 25 are formed between the adjacent projection pairs 22, and between the projections 23 on both sides in the line-up direction and the projections 23 adjacent thereto. A plurality of heat dissipation fins 29 are lined up on the top surface of the plate-shaped portion 21. The heat dissipation fins 29 are provided at the same positions of the projections 23 on an XZ plane, facing in a direction opposite to the direction in which the projections 23 face. Therefore, the heat dissipation member 20 is formed in a shape in which the top surface side and the lower surface side are symmetrical.

### Electricity storage module 30

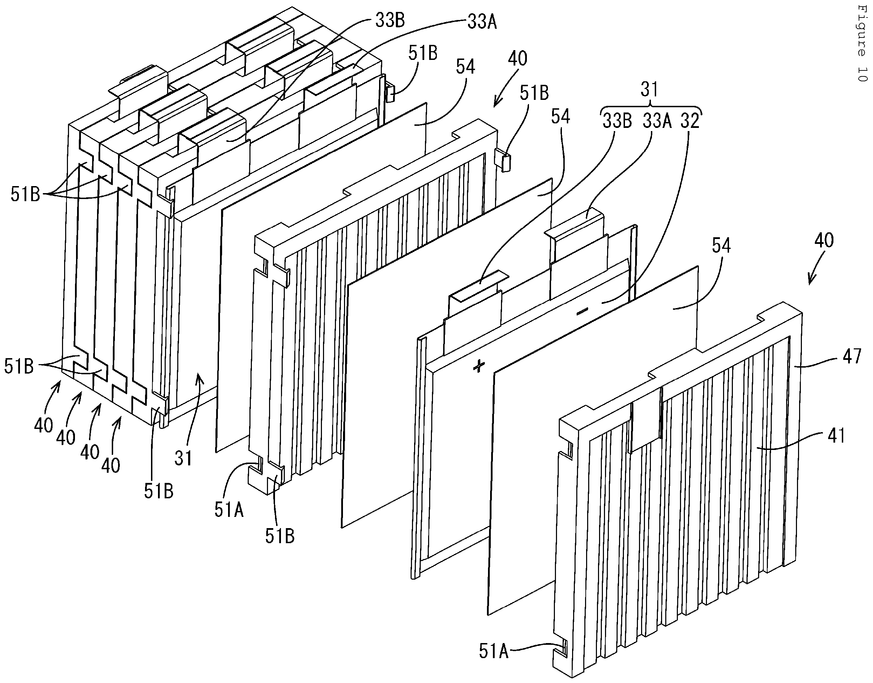

As shown in FIG. 10, the electricity storage module 30 includes a plurality of (six in this embodiment) electricity storage elements 31, sandwiching members 40 for sandwiching and holding the electricity storage elements 31, and absorption sheets 54. Each of the electricity storage elements 31 has a flattened and substantially rectangular shape.

### Electricity storage element 31

Each of the electricity storage elements 31 includes a main body portion 32 composed of a pair of laminate films inside which an electricity storage member is accommodated, and a pair of terminals 33A and 33B (lead terminals) having a male tab shape that is led out outward from the peripheral edge of the main body portion 32. In the main body portion 32, a portion of the pair of laminate films inside which the electricity storage member is accommodated is thickened by the thickness of the electricity storage member. The peripheral edge of the pair of laminate films is fastened through heat-welding or the like. The pair of terminals 33A and 33B includes a positive electrode terminal and a negative electrode terminal, and is bent into an L shape, facing in directions that are opposite to each other. The terminals 33A and 33B are made of a copper alloy, an aluminum alloy, or the like, for example, and their thicknesses are such that the terminals 33A and 33B can be bent easily.

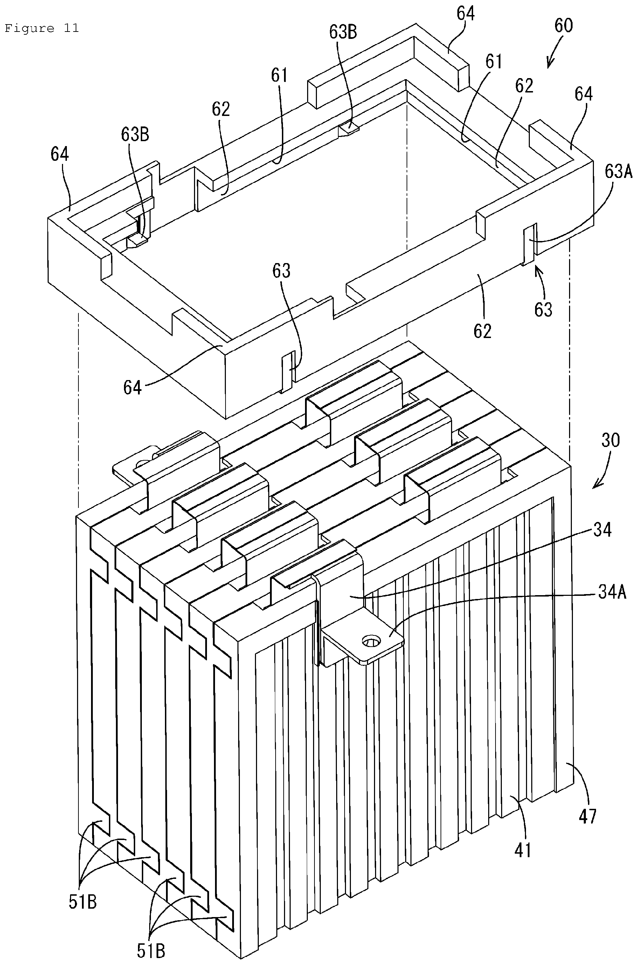

The electricity storage elements 31 are arranged such that the front surfaces or back surfaces of the adjacent electricity storage elements 31 face in opposite directions. The terminals 33A and 33B of the adjacent electricity storage elements 31 are connected through welding, for example, and thus the plurality of electricity storage elements 31 are connected in series. As shown in FIG. 11, the terminals 33A and 33B located at the ends of the series connection are connected to busbars 34. The busbars 34 are metal plates made of a copper alloy or the like that are connected to the terminals 33A and 33B through welding or the like, and external connecting terminals 34A that can be connected to the outside are led out to the outside from the case 11. Gaps between the busbars 34 and the case 11 are sealed using sealing members 35 made of rubber or the like.

Any electricity storage elements such as secondary batteries, capacitors, or condensers can be used as the electricity storage elements 31 as necessary. For example, secondary batteries such as lithium-ion batteries or nickel-metal hydride batteries are used as the electricity storage elements 31 according to this embodiment.

### Sandwiching member 40

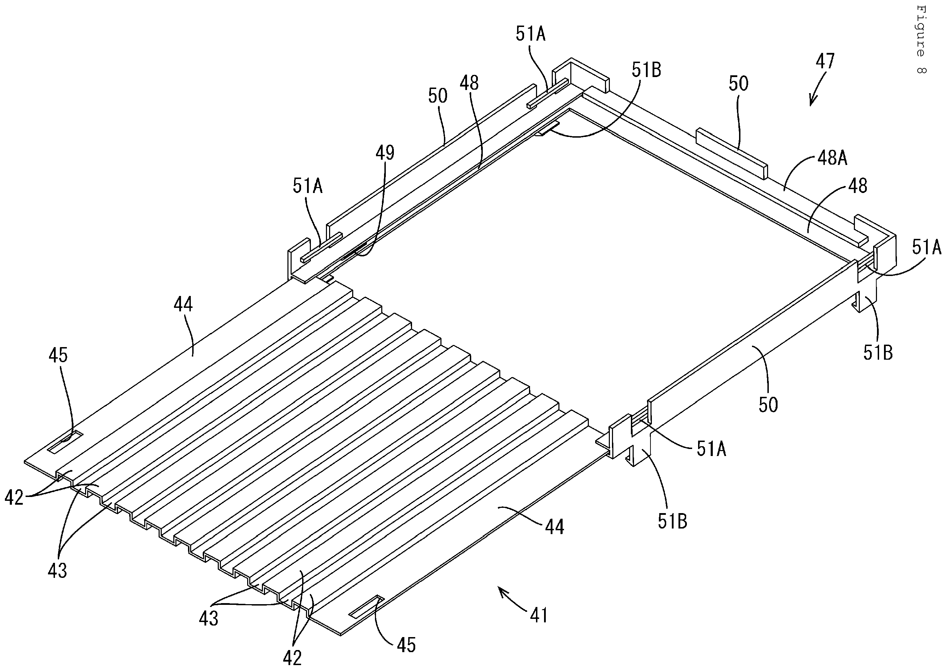

As shown in FIG. 8, each of the sandwiching members 40 includes a heat transfer member 41 and a frame-shaped member 47 into which the heat transfer member 41 is to be fitted.

### Heat transfer member 41

A member made of aluminum, an aluminum alloy, or the like having a high thermal conductivity is used as the heat transfer member 41, and protrusions 42 and recesses 43 are lined up alternately as viewed from the left and from the right. The heat transfer member 41 has the same shape over its entire length in the vertical direction, and therefore, the protrusions 42 and the recesses 43 are respectively formed as protruding strips and recessed strips that extend over the entire length in the vertical direction. The upper end of the heat transfer member 41 is fitted into the groove 25 of the heat dissipation member 20, and comes into contact with the groove 25. The front and rear ends of the heat transfer member 41 are formed as flat plate portions 44 in which the protrusions 42 and recesses 43 are not formed. Rectangular locking holes 45 for positioning relative to the frame-shaped member 47 are formed through the flat plate portions 44. The heat transfer member 41 is configured such that its upper end extends above the upper end of the absorption sheet 54.

### Frame-shaped member 47

The frame-shaped member 47 is made of an insulating synthetic resin (plastic) and is substantially U-shaped, including a fitting groove 48 into which the edges of the heat transfer member 41 are to be fitted, and a wall portion 50 that is formed along the outer peripheral edge and that projects toward one side in the front-rear direction. The fitting groove 48 is formed over the entire periphery on the inner surface side of the frame shaped member 47. The front and rear edges of the flat plate portion 44 are respectively inserted into the front and rear portion of the fitting groove 48, and the lower end of the heat transfer member 41 is inserted into the lower portion of the fitting groove 48. Locking projections 49 to be locked to the hole edges of the locking holes 45 of the flat plate portion 44 project from the inner surface of the fitting groove 48.

A coupled portion 51A, and a coupling portion 51B that is to be locked to the coupled portion 51A of the adjacent frame-shaped member 47 are formed in the wall portion 50. The coupled portion 51A is formed as a through hole formed by cutting the wall portion 50, and a locking claw of the coupling portion 51B can be locked to the hole edge of the through hole. In the coupling portion 51B, the locking claw is formed at the leading end of a bending piece that can be elastically deformed. The bending piece is elastically deformed, and thus the locking claw is locked to the coupled portion 51A of the adjacent frame-shaped member 47. As a result, the sandwiching member 40 in which the heat transfer member 41 has been attached to the frame-shaped member 47 is coupled to the adjacent sandwiching member 40 in a state in which the electricity storage element 31 and the absorption sheet 54 are sandwiched between the adjacent sandwiching members 40.

### Absorption sheet 54

Each of the absorption sheets 54 is a sheet composed of fibers of a porous body that has a rectangular shape with a size such that substantially the entire surface of the main body portion 32 can be covered. For example, a microfiber, which is a very thin chemical fiber, can be used. The absorption sheet 54 can be formed for example through injection molding using a mixture of pulp fibers and a binder.

### Coolant 55

The coolant 55 is an insulating liquid that is evaporated depending on the temperature, and the coolant 55 is accommodated in liquid form at the lower portion of the case 11 as shown in FIG. 4. The liquid coolant 55 is in contact with the lower portion of the electricity storage module 30 in an orientation in which the terminals 33A and 33B are located on the lower side, and the terminals 33A and 33B are arranged entirely in the liquid coolant 55. Perfluorocarbon or a fluorine-based inert liquid can be used as the coolant 55, for example. Examples of the fluorine-based inert liquid include Novec (registered trademark) HFE (hydro fluoro ether) and Fluorinert (registered trademark) manufactured by 3M.

The absorption sheets 54 absorb the coolant 55 by capillary action. It is sufficient if the amount of the coolant 55 is such that the plurality of absorption sheets 54 can absorb the coolant 55. The coolant 55 that has been absorbed by the absorption sheets 54 receives heat from the electricity storage elements 31, and thus is evaporated. Heat of the electricity storage elements 31 is absorbed as evaporation heat of the coolant 55, and thus a rise in temperature of the electricity storage elements 31 is suppressed.

When the vapor of the coolant 55 moves upward and reaches the heat dissipation member 20, heat generated during the condensation of the vapor is transferred to the heat dissipation member 20, and heat is dissipated from the heat dissipation fins 29 and the like. As a result, the temperature of the vapor of the coolant 55 decreases, and thus the coolant 55 is devolatilized and falls toward the bottom surface of the case 11.

### Holding member 60

As shown in FIGS. 4 and 11, the holding member 60 has a frame shape, and includes a plate-shaped mount portion 61 on which the ends of the frame-shaped members 47 are mounted, a holding wall 62 that projects upward from the mount portion 61 and is configured to hold the electricity storage module 30 thereinside, and supporting portions 64 that project downward from the mount portion 61 and are mounted on the bottom wall of the case 11 to support the electricity storage module 30.

The mount portion 61 has a plate shape with a predetermined thickness, and projects inward such that the outer peripheral edge of the electricity storage module 30 (lower ends of the frame-shaped members 47) can be mounted thereon. The holding wall 62 is provided along the entire periphery of the electricity storage module 30, and locking portions 63 that are to be locked to the frame-shaped members 47 are formed by cutting portions of the holding wall 62. Each of the locking portions 63 includes a bending piece 63A that projects in a direction in which the holding wall 62 rises and that can be elastically deformed, and a locking claw 63B located at the leading end of the bending piece. As shown in FIG. 4, the locking claws 63B are locked to the upper ends of groove walls 48A of the fitting grooves 48 on the lower end side of the frame-shaped members 47 at the ends of the coupling, and thus the electricity storage module 30 is held on the mount portion 61. The supporting portions 64 are formed in an L shape at the corners of the holding member 60, and have such a height that the terminals 33A and 33B of the electricity storage module 30 held by the holding member 60 are not in contact with the bottom surface of the case 11.

Next, a process for assembling the electricity storage pack 10 will be described.

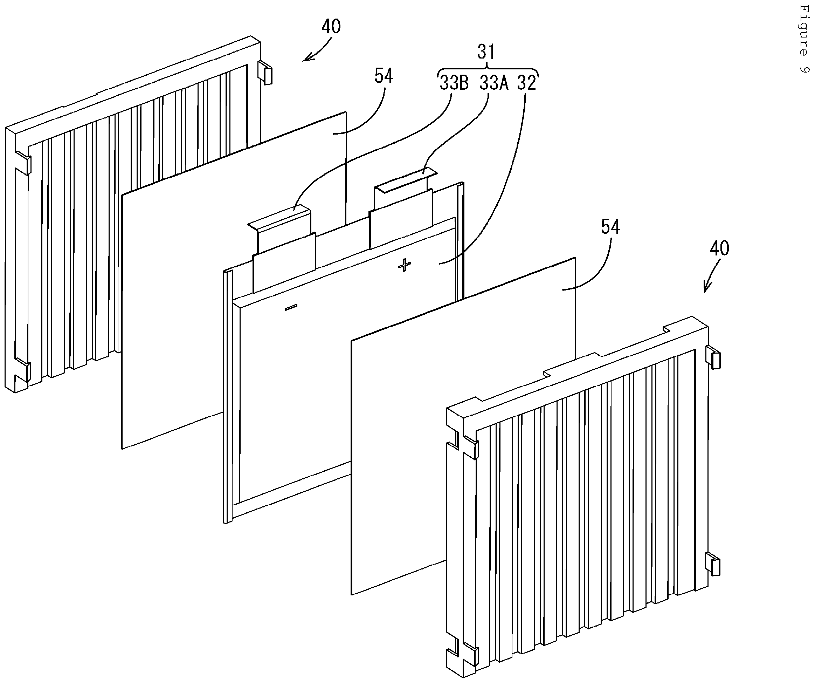

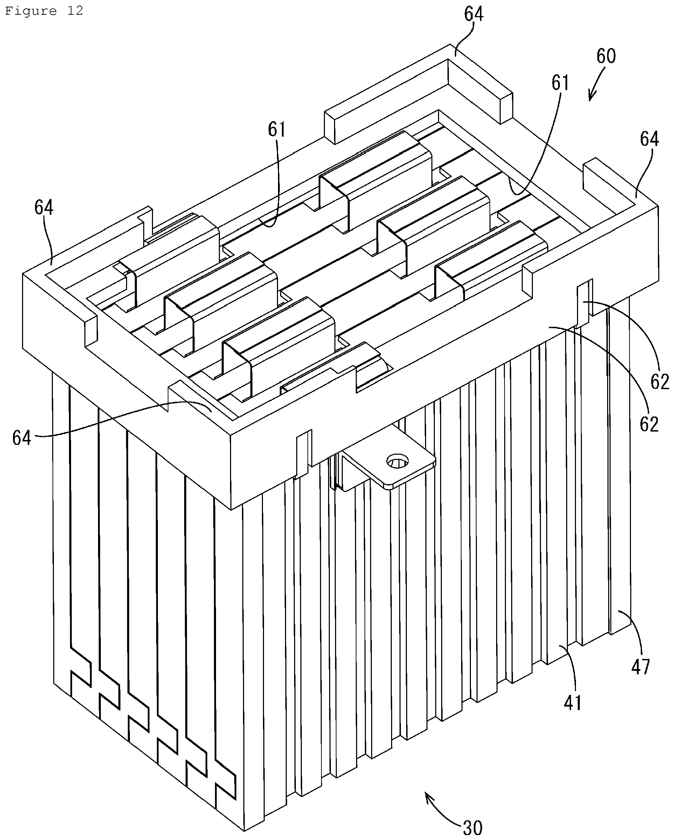

The plurality of sandwiching members 40 are formed by fitting the heat transfer members 41 into the frame-shaped members 47 (FIGS. 8 and 9), the electricity storage elements 31 and the plurality of absorption sheets 54 are sandwiched between the plurality of sandwiching members 40, and the frame-shaped members 47 are sequentially coupled by coupling the coupled portion 51A to the coupling portion 51B of the adjacent sandwiching member 40 (FIG. 10). The electricity storage module 30 is formed by coupling the plurality of sandwiching members 40 as shown in FIG. 11, and thus the holding member 60 is attached to the terminals 33A and 33B side of the electricity storage module 30 (FIG. 12).

Next, the electricity storage module 30 in which the holding member 60 has been attached to its lower side, and the coolant 55 are accommodated in the case main body 12. Then, the case main body 12 is covered with the heat dissipation member 20 and sealed while the grooves 25 of the heat dissipation member 20 are positioned at the upper end of the heat transfer member 41. The electricity storage pack 10 is thus formed (FIG. 1).

With this embodiment, the following operational effects are exerted.

In the electricity storage pack 10, the electricity storage elements 31 are accommodated in the case 11 in an orientation in which the terminals 33A and 33B face downward, and therefore, heat of the terminals 33A and 33B whose temperatures rise due to the flow of an electric current in the electricity storage elements 31 can be dissipated via the coolant 55 in liquid form that has been accommodated in the case 11 so as to be in contact with the terminals 33A and 33B. At this time, even when the electricity storage elements 31 are arranged in an orientation in which the terminals 33A and 33B face downward in this manner, the electricity storage elements 31 are held by the holding member 60, and therefore, a predetermined clearance is formed between the terminals 33A and 33B and the bottom surface of the case 11. Accordingly, it is possible to suppress the contact between the terminals 33A and 33B and the bottom surface of the case 11 or the like and protect the terminal 33A and 33B.

The electricity storage pack 10 includes the sandwiching members 40 between which the electricity storage element 31 is sandwiched and held, and the holding member 60 includes the mount portion 61 on which the sandwiching members 40 are mounted.

With this configuration, the electricity storage elements 31 can be held via the sandwiching members 40 in the case 11 by using a simple configuration in which the sandwiching members 40 are mounted on the mount portion 61.

The holding member 60 includes the locking portions 63 that are to be locked to the sandwiching members 40 to hold the sandwiching members 40 in a state in which the sandwiching members 40 are mounted on the mount portion 61.

With this configuration, the locking portions 63 can hold the sandwiching members 40 in the state in which the sandwiching members 40 are mounted on the mount portion 61.

The electricity storage pack 10 includes the absorption sheets 54 that absorb the liquid coolant 55, and the absorption sheets 54 are each arranged between the electricity storage element 31 and the sandwiching member 40.

With this configuration, the coolant 55 absorbed by the absorption sheets 54 receives heat, so that heat of the electricity storage elements 31 can be efficiently transferred to the coolant 55, while the sandwiching members 40 can be used to guide the coolant 55 evaporated from the absorption sheets 54 to the heat dissipation member 20 on the upper side.

### Other embodiments

The technique disclosed in this specification is not limited to the embodiment that has been described above with reference to the drawings, and embodiments such as those described below may also be included, for example.
(1) The shape of the holding member 60 is not limited to that of the above embodiment as long as the holding member 60 can hold the electricity storage elements 31 at certain positions, and the shape thereof can be changed to various shapes. For example, the holding member may also be formed in a shape such as a base shape on which the bottom surface of the electricity storage module 30 can be mounted, other than the frame shape of the above embodiment. In this case, a base or the like may be provided at a position at which the terminals 33A and 33B are not located.
(2) The positions at which the supporting portions 64 are provided are not limited to the corners of the electricity storage module 30. For example, a supporting portion may also be provided over the entire periphery of the electricity storage module 30. Moreover, the supporting portions need not be provided at positions along the outer peripheral edge of the electricity storage module 30 unlike the above embodiment. For example, supporting portions may also be provided at positions located inside with respect to the outer peripheral edge of the electricity storage module 30.
(3) Although a configuration in which the frame-shaped members 47 are mounted on the mount portion 61 was shown, there is no limitation thereto. For example, a configuration in which the electricity storage elements 31 and the heat transfer member 41 are mounted on the mount portion 61 is also possible.
(4) Although a configuration in which the absorption sheets 54 are provided was shown in the above embodiment, the absorption sheet 54 is not necessarily provided.
(5) The numbers of the electricity storage elements 31, the heat transfer member 41, and the like are not limited to the numbers shown in the above embodiment, and the numbers thereof may also be different.

### List of Reference Numerals

10: Electricity storage pack
11: Case
20: Heat dissipation member
30: Electricity storage module
31: Electricity storage element
40: Sandwiching member
41: Heat transfer member
47: Frame-shaped member
63: Locking portion
54: Absorption sheet
55: Coolant
60: Holding member
61: Mount portion
62: Holding wall
63: Locking portion
64: Supporting portion

## Claims

1. An electricity storage pack comprising:
an electricity storage element in which a positive electrode terminal and a negative electrode terminal are provided on one side;
a case that accommodates the electricity storage element;
a holding member that holds the electricity storage element in an orientation in which the terminals are located on a lower side in the case; and
a coolant in liquid form that is accommodated in the case so as to be in contact with the terminals.

2. The electricity storage pack according to claim 1, further comprising sandwiching members between which the electricity storage element is sandwiched and held,
wherein the holding member includes a mount portion on which the sandwiching members are mounted.

3. The electricity storage pack according to claim 2, wherein the holding member includes a locking portion that is to be locked to the sandwiching members to hold the sandwiching members in a state in which the sandwiching members are mounted on the mount portion.

4. The electricity storage pack according to claim 2 or 3, further comprising an absorption sheet that absorbs the liquid coolant, wherein the absorption sheet is arranged between the electricity storage element and the sandwiching member.
